# EUROPEAN PATENT APPLICATION

(11) **EP 3 885 263 A1**
(43) Date of publication of application: **29.09.2021**
(21) Application number: 21164500.7
(22) Date of filing: 24.03.2021
(51) Int. Cl.: B64D 11/06, B64D 11/00, B60R 16/02, H02G 3/04

(54) **SEAT UNIBEAM WITH ELECTRONICS PACKAGES**

(30) Priority: 27.03.2020 US 202063000634 P; 11.03.2021 US 202117198526
(71) Applicant: B/E Aerospace, Inc., Winston-Salem, NC 27105 (US)
(72) Inventor: MALECHA, Jeremy, Pfafftown, NC North Carolina 27040 (US); ZURIAN, Charles, Kernersville, NC North Carolina 28274 (US)
(74) Representative: Dehns

(57) **Abstract**

A seat unibeam (116) may include a defined cavity (408), a hole in an end of the seat unibeam, and an exterior surface. The defined cavity (408) may be dimensioned to receive an electronics package (400) inserted within the seat unibeam (116). The electronics package (400) may include a plurality of electronics package sections (700). The hole may lead to the defined cavity (408). Each of the plurality of electronics package sections (700) may be inserted into the cavity defined in the seat unibeam via the hole in the end of the seat unibeam. The exterior surface may be dimensioned to pass through at least one hole (300) in a plurality of seat legs. The exterior surface may be dimensioned to pass through at least one hole (200) in a plurality of spreaders including adjacent spreaders configured to support one or more components of an aircraft seat of the set of aircraft seats.

## Description

### CROSS-REFERENCE TO RELATED APPLICATIONS

The present application is related to and claims benefit of the earliest available effective filing date from the following applications: the present application claims the benefit of United States Provisional Application Serial Number 63/000,634, filed March 27, 2020.

### BACKGROUND

Select aircraft seats may include electronics equipment for onboard devices. The select aircraft seats may include a box under a seat pan, which may house the electronics equipment. The box may collect trash or be subject to impact from under-seat luggage or passenger feet, which may cause issues with the electronics equipment.

### SUMMARY

A set of aircraft seats is disclosed, in accordance with one or more embodiments of the disclosure. The set of aircraft seats may include a plurality of spreaders. Adjacent spreaders of the plurality of spreaders may be configured to support one or more components of an aircraft seat of the set of aircraft seats. The set of aircraft seats may include a plurality of seat legs. The plurality of seat legs may be configured to couple the set of aircraft seats to a floor of an aircraft and provide a seating area a select height from the floor of the aircraft. The set of aircraft seats may include a seat unibeam including an exterior surface. The exterior surface may be dimensioned to pass through at least one hole in the plurality of seat legs. The exterior surface may be dimensioned to pass through at least one hole in the plurality of spreaders. The set of aircraft seats may include an electronics package configured to be inserted into a cavity defined within the seat unibeam. The defined cavity may be dimensioned to receive the electronics package. The electronics package may include a plurality of electronics package sections. Each of the plurality of electronics package sections may be inserted into the cavity defined within the seat unibeam via a hole in an end of the seat unibeam.

In some embodiments, at least one of the plurality of spreaders may include a coupling assembly configured to secure the seat unibeam within the at least one hole in the plurality of spreaders.

In some embodiments, at least one of the plurality of seat legs may include a coupling assembly configured to secure the seat unibeam within the at least one hole in the plurality of seat legs.

In some embodiments, adjacent electronics package sections of the plurality of electronics package sections may be coupled via one or more electric quick-release connectors.

In some embodiments, adjacent electronics package sections of the plurality of electronics package sections may be coupled via one or more mechanical quick-release connectors.

In some embodiments, each of the plurality of electronics package sections may include a length less than a width of an aircraft aisle between the set of aircraft seats and an adjacent set of aircraft seats.

In some embodiments, the seat unibeam, the at least one hole in the plurality of seat legs, and the at least one hole in the plurality of spreaders may include an oval cross-section.

In some embodiments, each of the plurality of electronics package sections may be removable from and insertable into the hole in the end of the seat unibeam via the aircraft aisle.

In some embodiments, the set of aircraft seats may further include a bumper configured to couple to a spreader of the plurality of spreaders positioned proximate to the aircraft aisle.

In some embodiments, the hole in the end of the seat unibeam may be accessible when the bumper is uncoupled from the spreader.

In some embodiments, the electronics package may include a wiring harness configured to couple to electronic equipment within the set of aircraft seats.

In some embodiments, the electronic equipment within the set of aircraft seats may include one or more in-flight entertainment devices.

In some embodiments, the wiring harness and the electronic equipment within the set of aircraft seats may be coupled via one or more electric quick-release connectors.

In some embodiments, the one or more electric quick-release connectors may be accessible when the bumper is uncoupled from the spreader.

A seat unibeam is disclosed, in accordance with one or more embodiments of the disclosure. The seat unibeam may include a defined cavity. The defined cavity may be dimensioned to receive an electronics package inserted within the seat unibeam. The electronics package may include a plurality of electronics package sections. The seat unibeam may include a hole in an end of the seat unibeam. The hole may lead to the defined cavity. Each of the plurality of electronics package sections may be inserted into the cavity defined in the seat unibeam via the hole in the end of the seat unibeam. The seat unibeam may include an exterior surface. The exterior surface may be dimensioned to pass through at least one hole in a plurality of seat legs configured to couple a set of aircraft seats to a floor of an aircraft and provide a seating area a select height from the floor of the aircraft. The exterior surface may be dimensioned to pass through at least one hole in a plurality of spreaders including adjacent spreaders configured to support one or more components of an aircraft seat of the set of aircraft seats.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a perspective view of a seat unibeam with electronics packages, in accordance with one or more embodiments of the disclosure;
FIG. 1B illustrates a perspective view of an aircraft seat including a seat unibeam with electronics packages, in accordance with one or more embodiments of the disclosure;
FIG. 2 illustrates a partial perspective view of a seat unibeam with electronics packages, in accordance with one or more embodiments of the disclosure;
FIG. 3 illustrates a partial perspective view of a seat unibeam with electronics packages, in accordance with one or more embodiments of the disclosure;
FIG. 4A illustrates a perspective view of a seat unibeam with electronics packages, in accordance with one or more embodiments of the disclosure;
FIG. 4B illustrates an elevation view of a seat unibeam with electronics packages, in accordance with one or more embodiments of the disclosure;
FIG. 4C illustrates an elevation view of a seat unibeam with electronics packages, in accordance with one or more embodiments of the disclosure;
FIG. 5 illustrates a process for installing electronics packages within the seat unibeam, in accordance with one or more embodiments of the disclosure;
FIG. 6A illustrates a partial perspective view of a seat unibeam with electronics packages, in accordance with one or more embodiments of the disclosure;
FIG. 6B illustrates a partial perspective view of a seat unibeam with electronics packages, in accordance with one or more embodiments of the disclosure;
FIG. 7A illustrates a plan view of a set of seat unibeams with electronics packages, in accordance with one or more embodiments of the disclosure;
FIG. 7B illustrates a plan view of a set of seat unibeams with electronics packages, in accordance with one or more embodiments of the disclosure; and
FIG. 8 illustrates a plan view of a set of seat unibeams with electronics packages, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

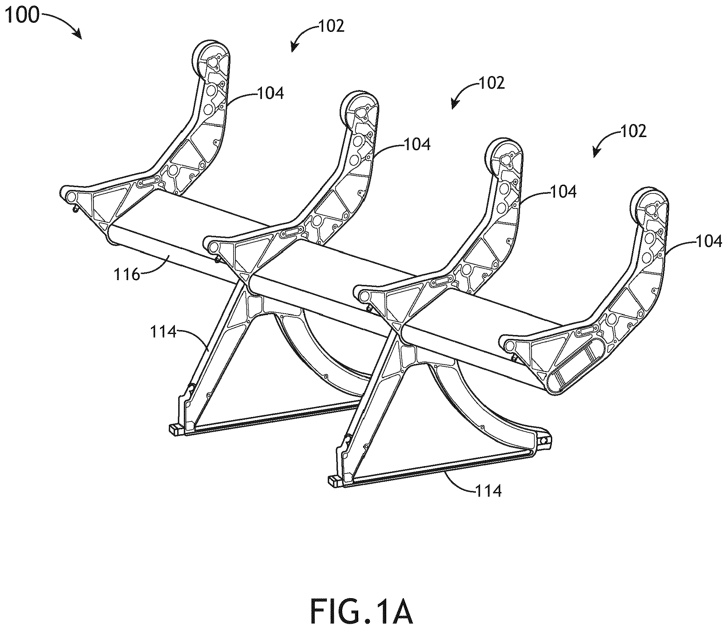

FIGS. 1A-8 in general illustrate a seat unibeam with electronics packages, in accordance with one or more embodiments of the disclosure.

Select aircraft seats may include electronics equipment for onboard devices. For example, the onboard devices may include, but are not limited to, in-flight entertainment devices, aircraft seat translation and/or rotation controls or actuators, safety sensors, or the like. The select aircraft seats may include a box under a seat pan, which may house the electronics equipment. The box may collect trash or be subject to impact from under-seat luggage or passenger feet, which may cause issues with the electronics equipment.

Should issues occur with the electronics equipment, select areas of the aircraft cabin are dismantled to be able to address the issues. Depending on the severity of the dismantling, the aircraft may be pulled from service so the dismantling may be completed on a factory floor, resulting in a loss of revenue.

As such, it would be desirable to relocate the electronics equipment within the aircraft seat. The place of relocation may be selected to protect the electronics equipment from impact or trash. The place of relocation may be selected to provide a passenger and/or under-seat luggage additional space. The place of relocation may be selected to reduce part count, which may result in decreased cost of manufacture and/or reduction of weight. The place of relocation may be selected to allow for repair on-site as opposed to on a factory floor, which may result in a decrease in loss of revenue due to repair downtime.

FIGS. 1A-4C in general illustrate a seat unibeam within a set of aircraft seats 100, in accordance with one or more embodiments of the disclosure.

The set of aircraft seats 100 may include one or more aircraft seats 102. For example, the set of aircraft seats 100 may include two or three aircraft seats 102 installed in a row formation. In general, the set of aircraft seats 100 may include any number of aircraft seats 102, subject to the limitations of an aircraft cabin in which the set of aircraft seats 100 are installed.

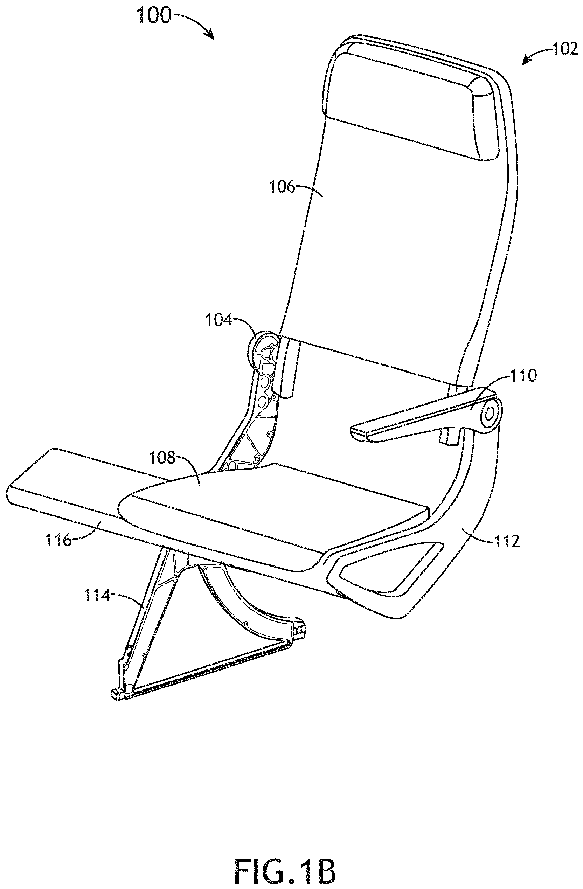

The set of aircraft seats 100 may include one or more spreaders 104. For example, as illustrated in FIG. 1B, components of an aircraft seat 102 which may be supported by and/or coupled to a pair of adjacent spreaders 104 may include, but are not limited to, an aircraft seat back 106, an aircraft seat pan 108, an aircraft arm rest 110, and/or a cap or bumper 112.

The set of aircraft seats 100 may include one or more seat legs 114. For example, the set of aircraft seats 100 may be coupled to a floor of the aircraft and configured to provide a seating area a select distance or height from the floor of the aircraft via the one or more seat legs 114.

The set of aircraft seats 100 may include one or more seat unibeams 116. For example, a seat unibeam 116 may pass through the set of aircraft seats 100. In general, the seat unibeam 116 may include any two-dimensional shape for a cross-section. For example, the seat unibeam 116 may include a shape with a closed area having 2, 3, up to an N number of sides. For instance, the shape may include, but is not limited to, an oval, an ellipse, a circle, a rectangle, a square, a kite, a diamond, a letter A, or the like. By way of another example, the seat unibeam 116 may include a shape with an open area. For instance, the shape may include, but is not limited to, a letter T, I, V, or the like.

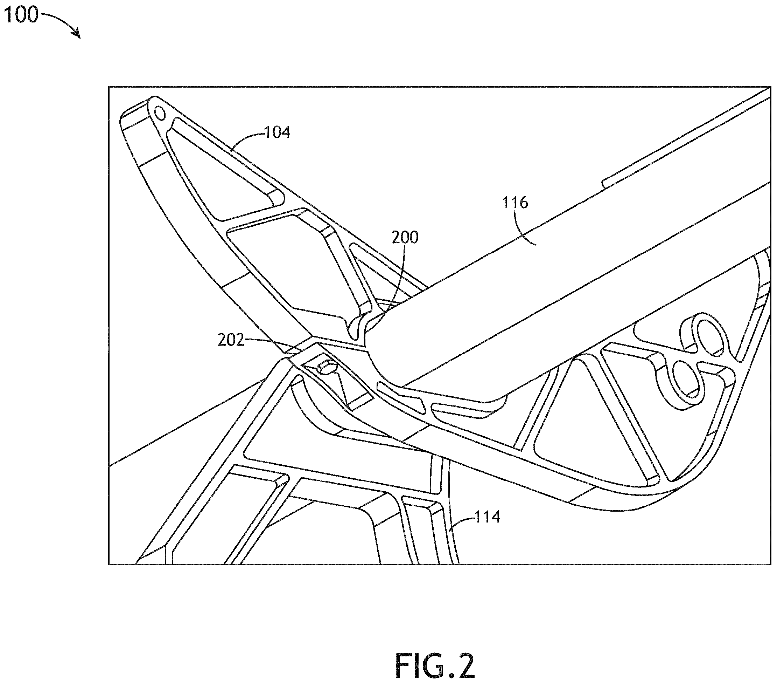

Referring now to FIG. 2, the one or more spreaders 104 may include one or more holes 200. For example, each of the one or more holes 200 may correspond to a particular seat unibeam 116 of the one or more seat unibeams 116. The one or more holes 200 may be dimensioned to receive the one or more seat unibeams 116. For example, a spreader 104 may include a coupling assembly 202 for each of the one or more holes 200, where a particular coupling assembly 202 may be configured to secure the seat unibeam 116 in place within a corresponding hole 200. For instance, a particular coupling assembly 202 may be configured to decrease one or more dimensions of a corresponding hole 200 following an insertion of a corresponding seat unibeam 116, to cause the hole 200 to secure the seat unibeam 116 in place within the set of aircraft seats 100. By way of another example, a hole 200 may be dimensioned to form an interference fit or press-fit with an exterior surface of a corresponding seat unibeam 116. By way of another example, a hole 200 and a corresponding seat unibeam 116 may each include components of an interlocking assembly (e.g., a tab-and-slot assembly, a tab-and-groove assembly, or the like). By way of another example, a hole 200 and a corresponding seat unibeam 116 may be coupled together via fasteners, an adhesive, a combination of fasteners and an adhesive, or the like. It is noted herein a hole 200 and a corresponding seat unibeam 116 may be coupled together via one or more of the provided examples. Therefore, the above description should not be interpreted as a limitation on the present disclosure but merely an illustration.

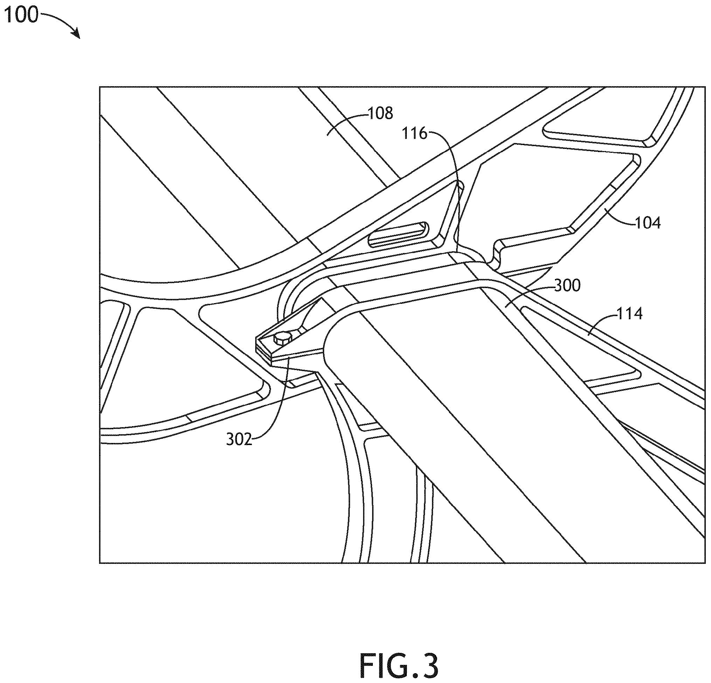

Referring now to FIG. 3, the one or more seat legs 114 may include one or more holes 300. For example, each of the one or more holes 300 may correspond to a particular seat unibeam 116 of the one or more seat unibeams 116. The one or more holes 300 may be dimensioned to receive the one or more seat unibeams 116. For example, a seat leg 114 may include a coupling assembly 302 for each of the one or more holes 300, where a particular coupling assembly 302 may be configured to secure the seat unibeam 116 in place within a corresponding hole 300. For instance, a particular coupling assembly 302 may be configured to decrease one or more dimensions of a corresponding hole 300 following an insertion of a corresponding seat unibeam 116, to cause the hole 300 to secure the seat unibeam 116 in place within the set of aircraft seats 100. By way of another example, a hole 300 may be dimensioned to form an interference fit or press-fit with an exterior surface of a corresponding seat unibeam 116. By way of another example, a hole 300 and a corresponding seat unibeam 116 may each include components of an interlocking assembly (e.g., a tab-and-slot assembly, a tab-and-groove assembly, or the like). By way of another example, a hole 300 and a corresponding seat unibeam 116 may be coupled together via fasteners, an adhesive, a combination of fasteners and an adhesive, or the like. It is noted herein a hole 300 and a corresponding seat unibeam 116 may be coupled together via one or more of the provided examples. Therefore, the above description should not be interpreted as a limitation on the present disclosure but merely an illustration.

It is noted herein the coupling assemblies 202, 302 may be configured to couple to the seat unibeam 116 without compromising an integrity of the seat unibeam 116 (e.g., applying excessive external forces through pinching, crimping, or other deformations of the seat unibeam 116).

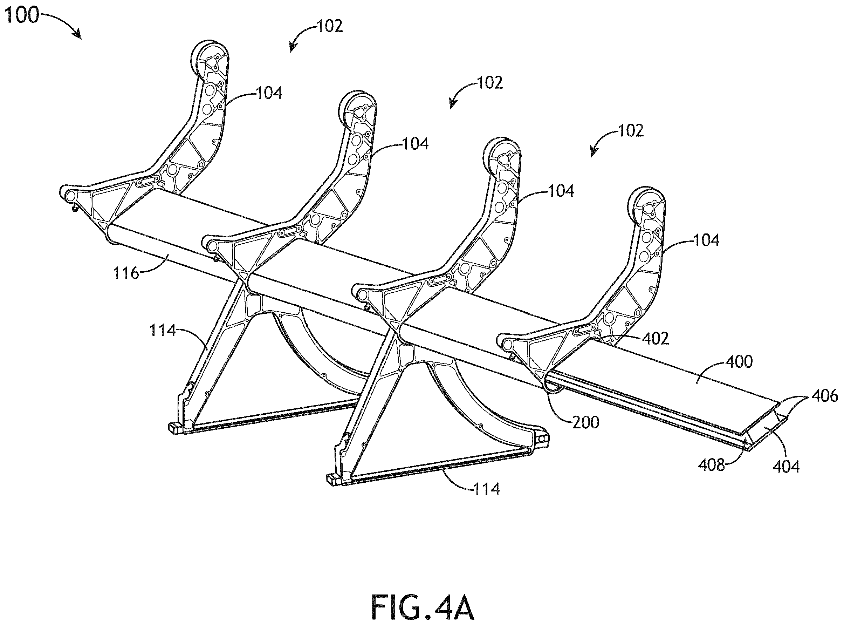

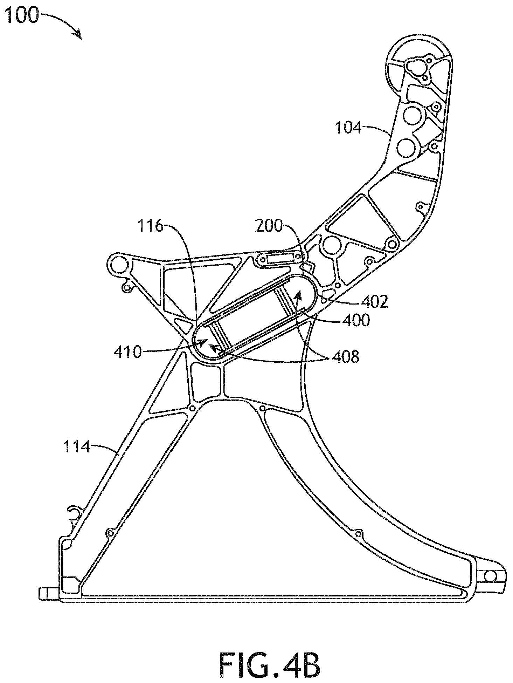

Referring now to FIGS. 4A-4C, the seat unibeam 116 may be configured to receive one or more electronics cassettes or electronics packages 400. The one or more electronics packages 400 may be inserted in a cavity or raceway defined within one or more exterior walls of the seat unibeam 116. An electronics package 400 may be inserted within a hole 402 of a particular seat unibeam 116 of the one or more seat unibeams 116. For example, the hole 402 may be accessible via an end of the particular seat unibeam 116.

An electronics package 400 may include a main body 404. The electronics package 400 may include one or more plates 406. For example, the main body 404 and/or the one or more plates 406 may be fabricated from a material including, but not limited to, a plastic or a metal. For instance, the metal may include, but is not limited to, aluminum.

The one or more plates 406 may be coupled to the main body 404. The electronics package 400 may include a hollow cavity or channel 408 for electronics equipment including, but not limited to, in-flight entertainment devices, aircraft seat translation and/or rotation controls or actuators, safety sensors, or the like. In general, the electronics package 400 may include any two-dimensional shape for a cross-section. For example, the one or more plates 406 may be coupled to the main body 404 such that the electronics package 400 may include a shape with an open area and the cavity or channel 408 may be exterior of the main body 404 and formed by an exterior surface of the main body 404 and the one or more plates 406. For instance, the shape may include, but is not limited to, a letter T, I, V, or the like. By way of another example, the electronics package 400 may include a shape with a closed area having 2, 3, up to an N number of sides and the cavity or channel 408 may be within the main body 404. For instance, the shape may include, but is not limited to, an oval, an ellipse, a circle, a rectangle, a square, a kite, a diamond, a letter A, or the like.

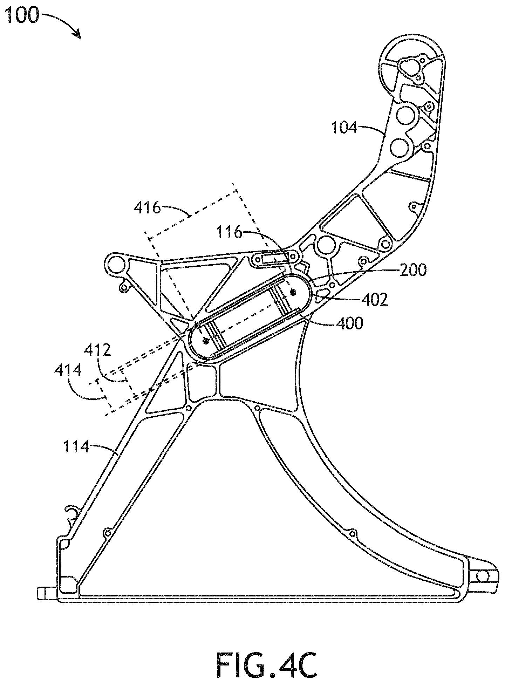

One or more of the combined dimensions of the main body 404 and the one or more plates 406 may be substantially similar to one or more dimensions of a particular seat unibeam 116 of the one or more seat unibeams 116. For example, as illustrated in FIG. 4C, the electronics package 400 may have a thickness 412 that is less than an interior diameter 414 of the seat unibeam 116. For instance, the difference between the thickness 412 and the interior diameter 414 may be such that the electronics package 400 is held in place within the seat unibeam 116 and is unable to move in at least one of a lateral direction or an axial direction relative to a direction of travel within the seat unibeam 116, but is not pressed in or subject to an interference fit. By way of another example, where the seat unibeam 116 includes a racetrack oval cross-section formed from a rectangle between two hemispheres, the electronics package 400 may include a width 416 that is equal or substantially similar to a distance between a large-diameter foci of the racetrack oval cross-section.

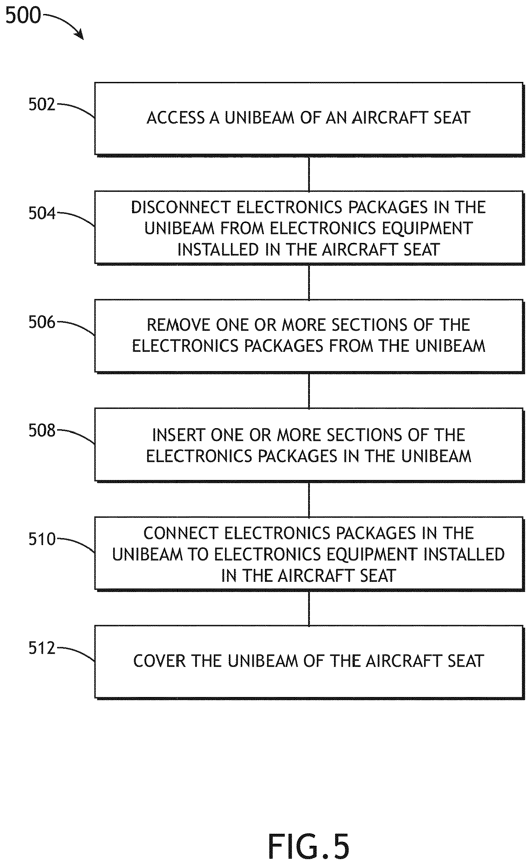

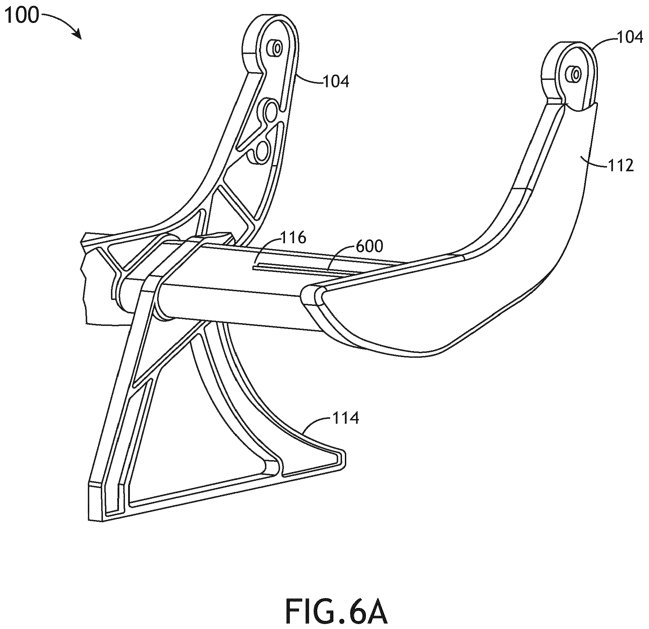

FIG. 5 illustrates a method or process 500 for uninstalling and/or installing electronics packages within a seat unibeam, in accordance with one or more embodiments of the disclosure. FIGS. 6A-8 in general illustrate an installation of a seat unibeam within a set of aircraft seats 100, in accordance with one or more embodiments of the disclosure.

In a step 502, a seat unibeam within an aircraft seat may be accessed. In a step 504, electronics packages in the seat unibeam may be disconnected from electronics packages installed in the aircraft seat.

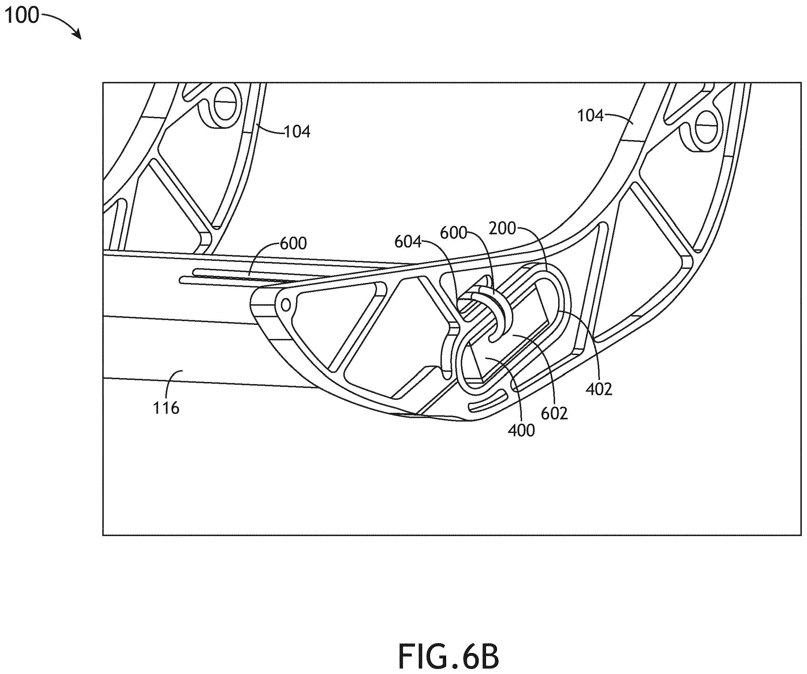

Referring now to FIGS. 6A and 6B, the cap or bumper 112 may be uncoupled from a spreader 104. For example, the cap or bumper 112 may be uncoupled from the spreader 104 via an interlocking assembly including, but not limited to, a press-on clip and tab assembly, an interlocking assembly including one or more rails, tracks, and/or sliders, or the like. By way of another example, the cap or bumper 112 may be uncoupled from the spreader 104 via an adhesive, fasteners, or the like.

The cap or bumper 112 may be configured to allow at least a portion of a wiring harness 600 to extend outward from the one or more electronics packages 400 within the seat unibeam 116 to electronics equipment installed in the set of aircraft seats 100 (e.g., in-flight entertainment devices, aircraft seat translation and/or rotation controls or actuators, safety sensors, or the like). The wiring harness 600 may include one or more electric quick-connect or quick-release assemblies 602 (or components of the one or more electric quick-connect or quick-release assemblies 602) configured to allow the one or more electronics packages 400 within the seat unibeam 116 to be quickly disconnected from the electronics equipment installed in the set of aircraft seats 100. For example, the electronics equipment installed in the set of aircraft seats 100 may include a wiring harness from which the one or more electronics packages 400 within the seat unibeam 116 may be quickly disconnected via the one or more electric quick-connect or quick-release assemblies 602 (or components of the one or more electric quick-connect or quick-release assemblies 602).

The wiring harness 600 may pass through one or more holes 604 within the one or more spreaders 104. It is noted herein, however, the wiring harness 600 may wrap around the one or more spreaders 104. Therefore, the above description should not be interpreted as a limitation on the present disclosure but merely an illustration.

Although embodiments of the disclosure illustrate the one or more electronics packages 400 as including the wiring harness 600, it is noted herein the one or more electronics equipment installed in the set of aircraft seats 100 may include the wiring harness 600 and the one or more electronics packages 400 may include

In a step 506, one or more sections of the electronics packages in the seat unibeam may be removed.

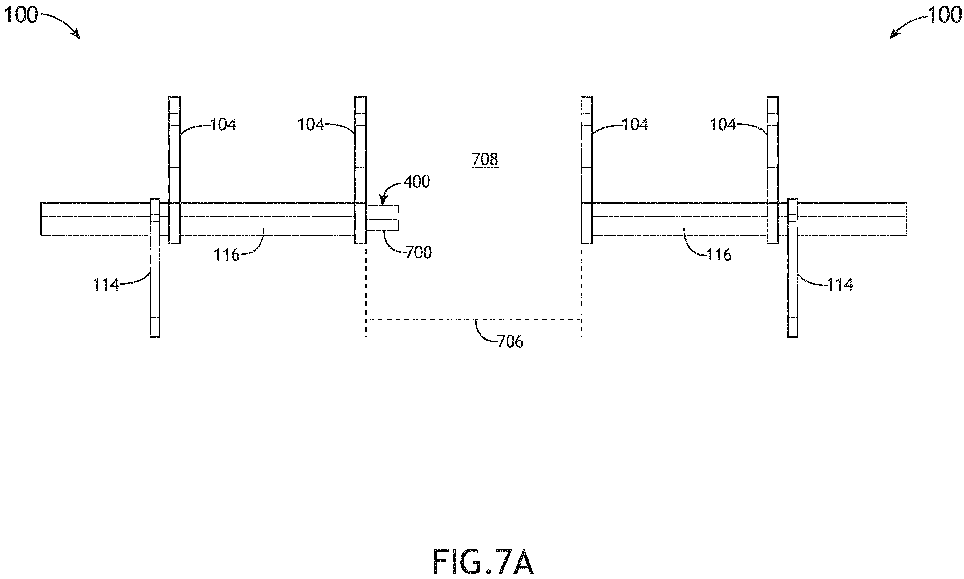

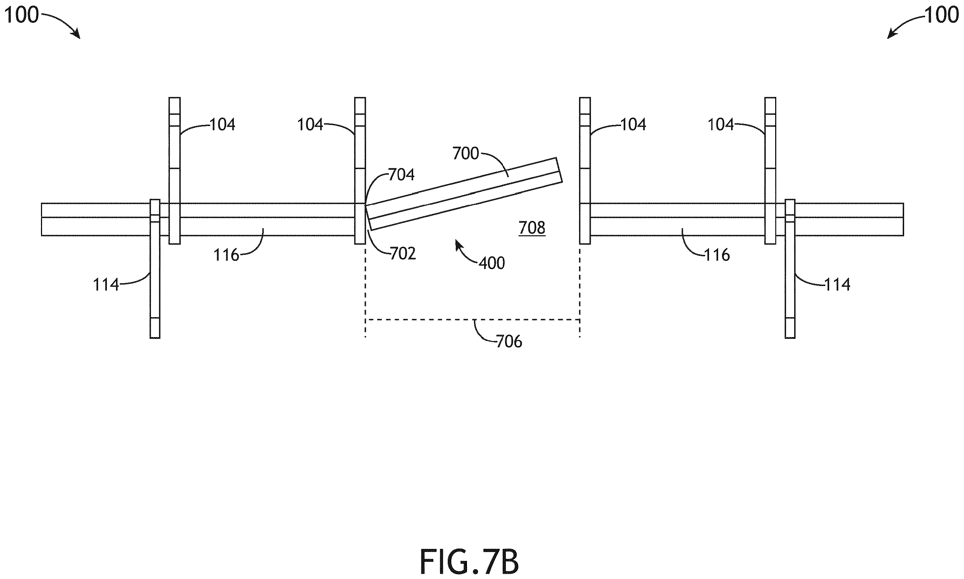

Referring now to FIGS. 7A and 7B, the one or more electronics packages 400 may include one or more electronics package sections 700. Where there are multiple electronics package sections 700, adjacent electronics package sections 700 may be uncoupled. For example, the adjacent electronics package sections 700 may include components of one or more electric quick-connect or quick-release assemblies 702 configured to allow the adjacent electronics package sections 700 to be quickly disconnected. By way of another example, the adjacent electronics package sections 700 may include components of one or more mechanical quick-connect or quick-release assemblies 704 configured to allow the adjacent electronics package sections 700 to be quickly disconnected. For instance, the one or more mechanical quick-connect or quick-release assemblies 704 may include one or more ball-and-socket or ball pivot assemblies, such that the removal of an electronics package section 700 may occur without stress building in the one or more electric quick-connect or quick-release assemblies 702 between the electronics package section 700 and an adjacent, coupled-to electronics package section 700.

The one or more electronics package sections 700 may have a length that is equal to or shorter than a width 706 of an aircraft aisle 708 between adjacent sets of aircraft seats 100. For example, the width 706 may be 20 inches, and the length of the one or more electronics package sections 700 may be 20 inches or less. It is noted herein that dimensioning the one or more electronics package sections 700 to be equal to or shorter than the width 706 of the aircraft aisle 708 may allow for the removal of electronics package sections 700 either on a factory floor or on-site within the aircraft aisle 708.

In a step 508, one or more sections of the electronics packages in the seat unibeam may be installed.

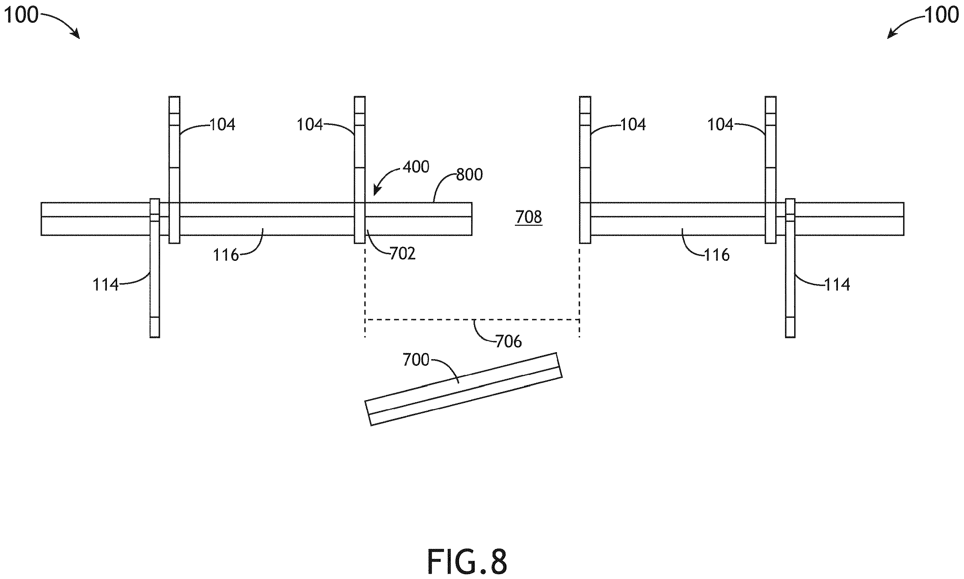

Referring now to FIG. 8, one or more removed electronics package sections 700 may be replaced with one or more electronics package sections 800. Where there are multiple electronics package sections 700, an adjacent electronics package section 700 left in the seat unibeam 116 and the electronics package section 800 may be coupled together. For example, the electronics package section 800 and the adjacent electronics package section 700 left in the seat unibeam 116 may include components of one or more electric quick-connect or quick-release assemblies 702 configured to allow the adjacent electronics package sections 700 to be quickly connected. By way of another example, the electronics package section 800 and the adjacent electronics package section 700 left in the seat unibeam 116 may include components of one or more mechanical quick-connect or quick-release assemblies 704 configured to allow the adjacent electronics package sections 700 to be quickly connected. For instance, the one or more mechanical quick-connect or quick-release assemblies 704 may include one or more ball-and-socket or ball pivot assemblies, such that the installation of an electronics package section 800 may occur without stress building in the one or more electric quick-connect or quick-release assemblies 702 between the electronics package section 800 and the adjacent electronics package section 700 left in the seat unibeam 116.

The one or more electronics package sections 800 may have a length that is equal to or shorter than the width 706 of the aircraft aisle 708 between adjacent sets of aircraft seats 100. For example, the width 706 may be 20 inches, and the length of the one or more electronics package sections 800 may be 20 inches or less. It is noted herein that dimensioning the one or more electronics package sections 800 to be equal to or shorter than the width 706 of the aircraft aisle 708 may allow for the installation of electronics package sections 800 either on a factory floor or on-site within an aisle of the aircraft.

Although embodiments illustrate the installation of the one or more electronics package sections 800, it is noted herein the previously-removed one or more electronics package sections 700 may be re-installed should no fault be found in the one or more electronics package sections 700. Therefore, the above description should not be interpreted as a limitation on the present disclosure but merely an illustration.

In a step 510, electronics packages in the seat unibeam may be connected to electronics packages installed in the aircraft seat. In a step 512, the seat unibeam within the aircraft seat may be covered.

The cap or bumper 112 may be configured to allow at least a portion of a wiring harness 600 to extend outward from the one or more electronics packages 400 within the seat unibeam 116 to electronics equipment installed in the set of aircraft seats 100 (e.g., in-flight entertainment devices, aircraft seat translation and/or rotation controls or actuators, safety sensors, or the like). The wiring harness 600 may include one or more electric quick-connect or quick-release assemblies 602 (or components of the one or more electric quick-connect or quick-release assemblies 602) configured to allow the one or more electronics packages 400 within the seat unibeam 116 to be quickly connected to the electronics equipment installed in the set of aircraft seats 100. For example, the electronics equipment installed in the set of aircraft seats 100 may include a the wiring harness to which the one or more electronics packages 400 within the seat unibeam 116 may be quickly connected via the one or more electric quick-connect or quick-release assemblies 602 (or components of the one or more electric quick-connect or quick-release assemblies 602).

The wiring harness 600 may pass through one or more holes 604 within the one or more spreaders 104. It is noted herein, however, the wiring harness 600 may wrap around the one or more spreaders 104. Therefore, the above description should not be interpreted as a limitation on the present disclosure but merely an illustration

The cap or bumper 112 may be coupled to the spreader 104. For example, the cap or bumper 112 may be coupled to the spreader 104 via an interlocking assembly including, but not limited to, a press-on clip and tab assembly, an interlocking assembly including one or more rails, tracks, and/or sliders, or the like. By way of another example, the cap or bumper 112 may be coupled to the spreader 104 via an adhesive, fasteners, or the like.

In this regard, one or more electronics package sections 700 may be removed from a seat unibeam 116 and one or more electronics package sections 800 may be installed, either on a factory floor or on-site (within the aircraft aisle 708).

It is noted herein the method or process 500 for uninstalling and/or installing electronics packages within a seat unibeam is not limited to the steps and/or sub-steps provided. For example, the method or process 500 may include more or fewer steps and/or sub-steps. In addition, the method or process 500 may perform the steps and/or sub-steps simultaneously. Further, the method or process 500 may perform the steps and/or sub-steps sequentially, including in the order provided or an order other than provided. Therefore, the above description should not be interpreted as a limitation on the scope of the disclosure but merely an illustration.

Although embodiments of the present disclosure illustrate the electronics packages being contained within the one or more electronics packages 400, it is noted herein the electronics packages may be loosely installed within the seat unibeam 116. Therefore, the above description should not be interpreted as a limitation on the present disclosure but merely an illustration.

In this regard, the seat unibeam 116 may be configured to relocate the electronics equipment (e.g., the electronics packages 400) within the aircraft seat 102 (or set of aircraft seats 100). The place of relocation may be selected to protect the electronics equipment (e.g., the electronics packages 400) from impact (e.g., by being inserted within the one or more spreaders 104 and/or the one or more seat legs 114) or trash (e.g., by being covered by the cap or bumper 112). The place of relocation may be selected to provide a passenger and/or under-seat luggage additional space. The place of relocation may be selected to reduce part count, which may result in decreased cost of manufacture and/or reduction of weight. The place of relocation may be selected to allow for repair on-site (e.g., due to aircraft aisle access of the seat unibeam 116) as opposed to on a factory floor, which may result in a decrease in loss of revenue due to repair downtime.

Where the seat unibeam 116 and the electronics packages 400 are installed in an avionics environment (e.g., within the one or more spreaders 104 and/or the one or more seat legs 114 of the aircraft seat 102 (or set of aircraft seats 100)), it is noted herein the seat unibeam 116 and the electronics packages 400 may be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

Although embodiments of the disclosure are directed to an avionics environment, it is noted herein the seat unibeam 116 and the electronics packages 400 are not limited to the avionics environment and/or the aircraft components within the avionics environment. For example, the seat unibeam 116 and the electronics packages 400 may be configured to operate in any type of vehicle known in the art. For example, the vehicle may be any air, space, land, or water-based personal equipment or vehicle; any air, space, land, or water-based commercial equipment or vehicle; any air, space, land, or water-based military equipment or vehicle known in the art. For instance, the vehicle may include an automobile. By way of another example, the seat unibeam 116 and the electronics packages 400 may be coupled to and/or configured to operate with apparatus sold for commercial or industrial use in either a home or a business. Therefore, the above description should not be interpreted as a limitation on the present disclosure but merely an illustration.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. A set of aircraft seats, comprising:
a plurality of spreaders (104), adjacent spreaders of the plurality of spreaders being configured to support one or more components of an aircraft seat of the set of aircraft seats;
a plurality of seat legs (114), the plurality of seat legs configured to couple the set of aircraft seats to a floor of an aircraft and provide a seating area a select height from the floor of the aircraft;
a seat unibeam (116) including an exterior surface, the exterior surface being dimensioned to pass through at least one hole (300) in the plurality of seat legs, the exterior surface being dimensioned to pass through at least one hole (200) in the plurality of spreaders; and
an electronics package (400) configured to be inserted into a cavity (408) defined within the seat unibeam, the defined cavity being dimensioned to receive the electronics package, the electronics package including a plurality of electronics package sections (700), each of the plurality of electronics package sections being inserted into the cavity defined within the seat unibeam via a hole in an end of the seat unibeam.

2. The set of aircraft seats of Claim 1, at least one of the plurality of spreaders including a coupling assembly (202) configured to secure the seat unibeam within the at least one hole in the plurality of spreaders.

3. The set of aircraft seats of Claim 1 or 2, at least one of the plurality of seat legs including a coupling assembly (302) configured to secure the seat unibeam within the at least one hole in the plurality of seat legs.

4. The set of aircraft seats of any preceding Claim, adjacent electronics package sections of the plurality of electronics package sections (700) being coupled via one or more electric quick-release connectors.

5. The set of aircraft seats of any preceding Claim, adjacent electronics package sections of the plurality of electronics package sections (700) being coupled via one or more mechanical quick-release connectors.

6. The set of aircraft seats of any preceding Claim, each of the plurality of electronics package sections (700) including a length less than a width of an aircraft aisle between the set of aircraft seats and an adjacent set of aircraft seats.

7. The set of aircraft seats of any preceding Claim, the seat unibeam, the at least one hole (300) in the plurality of seat legs, and the at least one hole (200) in the plurality of spreaders including an oval cross-section.

8. The set of aircraft seats of Claim 6, each of the plurality of electronics package sections (700) being removable from and insertable into the hole in the end of the seat unibeam via the aircraft aisle.

9. The set of aircraft seats of Claim 6, further comprising:
a bumper (112) configured to couple to a spreader of the plurality of spreaders positioned proximate to the aircraft aisle.

10. The set of aircraft seats of Claim 9, the hole in the end of the seat unibeam being accessible when the bumper (112) is uncoupled from the spreader.

11. The set of aircraft seats of Claim 10, the electronics package including a wiring harness (600) configured to couple to electronic equipment within the set of aircraft seats.

12. The set of aircraft seats of Claim 11, the electronic equipment within the set of aircraft seats including one or more in-flight entertainment devices.

13. The set of aircraft seats of Claim 11, the wiring harness (600) and the electronic equipment within the set of aircraft seats being coupled via one or more electric quick-release connectors.

14. The set of aircraft seats of Claim 13, the one or more electric quick-release connectors being accessible when the bumper is uncoupled from the spreader.

15. A seat unibeam (116), comprising:
a defined cavity (408), the defined cavity being dimensioned to receive an electronics package (400) inserted within the seat unibeam, the electronics package including a plurality of electronics package sections (700);
a hole in an end of the seat unibeam, the hole leading to the defined cavity, each of the plurality of electronics package sections being inserted into the cavity defined in the seat unibeam via the hole in the end of the seat unibeam; and
an exterior surface, the exterior surface being dimensioned to pass through at least one hole (300) in a plurality of seat legs configured to couple a set of aircraft seats to a floor of an aircraft and provide a seating area a select height from the floor of the aircraft, the exterior surface being dimensioned to pass through at least one hole (200) in a plurality of spreaders including adjacent spreaders configured to support one or more components of an aircraft seat of the set of aircraft seats.
